# FASCICULE DE BREVET EUROPEEN

(11) **EP 2 859 027 B1**
(45) Date de publication et mention de la délivrance du brevet: **14.08.2024**
(21) Numéro de dépôt: 13733354.8
(22) Date de dépôt: 06.06.2013
(51) Int. Cl.: C08F 220/28, C08F 8/14, C08F 8/48, C08F 283/02, C08G 63/49, C08F 283/01, C09D 133/14, C08L 33/14, C08F 8/32, C08G 71/04, C08L 75/04, C09D 175/04

(54) **RÉSINES PORTANT DES GROUPEMENTS CARBONATES CYCLIQUES ET COMPOSITIONS RETICULABLES DE CES RÉSINES A FAIBLE TAUX DE COV**
HARZE MIT CYCLISCHEN CARBONATGRUPPEN UND VERNETZBARE ZUSAMMENSETZUNGEN AUS DIESEN HARZEN MIT NIEDRIGEM GEHALT AN FLÜCHTIGEN ORGANISCHEN VERBINDUNGEN
RESINS BEARING CYCLIC CARBONATE GROUPS AND CROSS-LINKABLE COMPOSITIONS OF SAID RESINS HAVING A LOW VOC LEVEL

(30) Priorité: 07.06.2012 FR 1255335
(43) Date de publication de la demande: 15.04.2015
(73) Titulaire: Arkema France, 92700 Colombes (FR)
(72) Inventeur: PIERRE, Aurélie, 75018 Paris (FR); COGORDAN, Frank, F-75019 Paris (FR); DELMAS, Gregory, F-60300 Senlis (FR)
(74) Mandataire: Arkema Patent
(86) Numéro de dépôt international: PCT/FR2013/051289
(87) Numéro de publication internationale: WO 2013/182814

(56) Documents cités:
- EP-A1- 0 394 786
- WO-A1-00/35972
- BE-A4- 1 009 543
- FR-A- 1 207 790
- US-A- 4 882 391

## Description

La présente invention concerne une résine spécifique, en particulier acrylique, portant des groupements carbonates cycliques, un procédé de préparation et des compositions réticulables en particulier de revêtements comprenant ladite résine pour la préparation de polyuréthanes réticulés sans aucun usage d'isocyanate, lesdites compositions ayant un taux d'extrait sec élevé et un taux faible de composés organiques volatils COV (ou VOC en anglais).

Plus particulièrement, la présente invention concerne l'obtention de polyuréthanes (PU) réticulés à partir d'un système bicomposant réactif mais sans isocyanates à base de la résine de l'invention en milieu solvant (on utilisera également le terme solvanté) organique et en utilisant comme agents réticulants alternatifs des polyamines.

D'une manière générale, il est bien connu comment obtenir des polyuréthanes réticulés à partir d'un système bicomposant dans un solvant organique à partir d'une résine polyol par réaction avec un polyisocyanate. Plus particulièrement, des polyols acryliques sont préférés pour des applications de revêtements compte tenu de leurs meilleures performances en particulier au vieillissement. Ces polyols sont des copolymères d'un mélange de monomères acryliques comprenant un monomère hydroxy alkyl acrylate tel que l'hydroxy éthyl (méth)acrylate (HE(M)A) ou l'hydroxypropyl (méth)acrylate.

L'inconvénient essentiel de ces systèmes de l'état de la technique est lié au fait qu'un isocyanate (polyisocyanate) est indispensable comme agent réticulant de ces systèmes bicomposants polyuréthanes réticulés à base de résines acryliques polyols. Cependant, cette utilisation pose des problèmes de toxicité, de sécurité et de nocivité pour la santé humaine et pour l'environnement en général, problèmes qui imposent des contraintes lourdes concernant leur manipulation qui devient ainsi de plus en plus compliquée et coûteuse. Compte tenu de leur toxicité et de leur préparation à partir de matières premières également toxiques et nocives pour l'environnement, comme le phosgène avec émission d'acide chlorhydrique également nocif pour l'environnement, cette chimie, basée sur l'utilisation des isocyanates, a besoin d'être remplacée par des solutions plus amicales à l'homme et à l'environnement et qui respectent l'environnement et la santé humaine comme le développement durable à partir de nouvelles matières premières le permettant.

D'autre part, en plus du problème de santé et d'environnement, l'utilisation d'un système réticulable polyol-isocyanate est sensible à l'humidité intrinsèque de la résine polyol qui a besoin d'être séchée avec un taux d'humidité contrôlée avant utilisation pour la prise en compte d'un excès éventuel en isocyanate pour compenser la consommation d'isocyanate par ce taux d'humidité.

Ensuite, les conditions de température et d'humidité ambiante lors de l'application des revêtements à base d'un tel système contenant un isocyanate sont imposées par les conditions climatiques externes au système et incontrôlables. Cela a comme effet la difficulté et l'impossibilité de contrôle de la consommation d'isocyanate par l'humidité ambiante et donc de la structure finale du revêtement obtenu (densité de réticulation) et des performances finales liées à cette structure. Afin de palier à cette consommation, un excès d'isocyanate peut être envisagé mais avec une surconsommation d'isocyanate qui peut rester libre pendant un certain temps dans le système avant consommation par l'humidité ambiante avec des réactions secondaires (décarboxylation et formation de polyamines transformées en polyurées) qui peuvent affecter la structure et performances du revêtement final. En particulier, le dégagement de CO₂ conduit à la formation de bulles (défauts) dans le revêtement final, en particulier dans le cas de revêtements épais. L'autre inconvénient des isocyanates dans ces revêtements est leur impact élevé sur le prix de revient.

Des systèmes bicomposants nouveaux sont déjà connus de l'état de la technique sans usage d'un polyisocyanate (appelés NIPU : non isocyanate PU), pour remplacer les systèmes PU à base de polyol-polyisocyanate. Ils sont à base de résines portant des groupements carbonates cycliques réticulables par une polyamine.

Plus particulièrement, BE 1009543 décrit un système à base de résine acrylique fonctionnalisée carbonate avec réticulation par une polyamine primaire pour applications clear coat.

EP 0394 786 décrit un système à base d'une composition constituée de copolymères fonctionnalisés carbonate, d'une polyamine bloquée, d'un catalyseur et/ou d'autres additifs.

WO 2011/035982 décrit un système à base de résines acryliques hydrodispersibles à fonctionnalité carbonate pour réticulation avec des polyamines, la synthèse étant réalisée en milieu solvant, pour une application dans les adhésifs, les mastics, les revêtements et en particulier pour la protection contre la corrosion. La très bonne résistance chimique de ce système constitue son principal avantage, ainsi que son absence de sensibilité à l'eau.

US 4,882,391 décrit des produits de réaction entre monomères A) porteurs de carbonates cycliques et B) un composé amine (amine primaire) aliphatique ou cycloaliphatique et en plus porteur d'une amine basique et conduisant à un produit non réticulé.

WO 00/035972 décrit des polymères porteurs de fonctions carbonates cycliques, en particulier à base de monomères vinyliques, solubles dans des solvants organiques et compatibles avec des agents réticulants. Ils sont préparés par copolymérisation de vinyl éthylène carbonate avec des comonomères vinyl esters compatibles.

FR 1 207 790 décrit des monomères méthacryliques à carbonate cyclique et le procédé de leur préparation ainsi que leur utilisation dans des polymères et copolymères comprenant la fonction carbonate cyclique.

Bien qu'un tel système permette a priori l'obtention de polyuréthanes (PU) sans faire usage d'un polyisocyanate, plusieurs problèmes supplémentaires sont à surmonter en plus de ceux cités. En particulier, en milieu solvant une résine acrylique portant des fonctions carbonates cycliques a une viscosité beaucoup plus élevée qu'une résine équivalente hydroxylée pour le même taux massique en monomère porteur de la fonction correspondante, ce qui signifie une viscosité significativement plus élevée pour le même taux molaire (ou même indice exprimé en équivalents mg KOH/g). Ceci a comme conséquence la limitation du taux d'extrait sec (ou des solides) dans la composition réticulable, ceci afin de pouvoir garder une viscosité constante et adaptée, paramètre essentiel pour les applications des revêtements.

Au moment où les réglementations sur la réduction des COV se durcissent, il n'est pas connu dans l'état de la technique de solutions satisfaisant ce problème. Donc, il y a un besoin de nouvelles résines, en particulier acryliques, fonctionnalisées carbonates permettant la formulation de revêtements et en particulier de peintures ou vernis à basse teneur en COV et avec un taux d'extrait sec élevé et une viscosité adaptée à l'application revêtements en milieu solvant organique.

Donc, le problème consiste d'abord à trouver une résine spécifiquement sélectionnée sans besoin d'utiliser des isocyanates, portant des groupements carbonates cycliques ayant une viscosité suffisamment réduite en milieu solvant organique, pour permettre un système bicomposant spécifique, réticulable à température ambiante, de préférence de -20 à 25°C avec une polyamine comme agent réticulant ayant un taux de COV faible, de préférence inférieur à 420 g/l pour composés ayant un point d'ébullition inférieur à 250°C et un taux de solides élevé, dépendant de l'application, sans affecter la viscosité visée d'application dans les revêtements réticulables en milieu solvant. Ce système spécifique tel que ciblé doit être un nouveau système bicomposant polyuréthane réticulable sans aucun usage d'isocyanate et, de ce fait et par le fait du taux réduit de COV, il doit être respectueux de l'environnement et de la santé, en particulier être non-sensible à l'humidité intrinsèque de la résine ou à l'humidité ambiante lors de l'application du revêtement et avoir des performances des revêtements polyuréthanes ainsi obtenus, du moins pas affectées (de manière significative) ou similaires, sinon identiques, à celles d'un système polyol-polyisocyanate comparable de l'état de la technique.

Plus particulièrement, la présente invention permet par une sélection particulière de la composition des monomères et de la structure spécifique de ladite résine, la réduction de la viscosité en solution de la résine obtenue par rapport à une résine polyol standard de l'état de l'art.

La résine spécifique de l'invention qui permet de remédier aux inconvénients cités de l'état de la technique est basée sur l'utilisation d'un mélange spécifique de monomères permettant d'améliorer la solubilité de la résine dans le solvant organique d'application finale et de diminuer ainsi la teneur en COV dans la formulation finale. Ce mélange spécifique est utilisé pour préparer une nouvelle résine par polymérisation dudit mélange de monomères, lequel selon une option particulière peut comprendre en plus et en partie minoritaire une résine polyester, en particulier à base d'acide gras, comme une résine alkyde.

Ainsi, le système réticulable de l'invention vise un système à faible taux de COV et à haut extrait sec dans la formulation finale, sans affectation des conditions d'application du revêtement, en particulier la viscosité restant non affectée (constante) avec un taux de solides élevé.

Parmi les principaux avantages liés au nouveau système selon la présente invention, on peut citer les suivants :
- obtention de revêtements PU avec des propriétés inhérentes à ce type de revêtement, sans utilisation d'isocyanates et avec des conditions améliorées d'hygiène et de sécurité et avec respect de l'environnement et du moins sans affectation (de manière significative) des performances essentielles dudit revêtement ou maintien à un état de performances similaire, sinon identique, à celles d'un système polyol-polyisocyanate comparable de l'état de la technique,
- réticulation à température ambiante de préférence pouvant aller de -20 à 25°C, sans besoin de chauffer avec économie d'énergie et en particulier une réticulation sans catalyseur, plus particulièrement en l'absence de tout catalyseur à base de métaux lourds comme c'est le cas avec les PU classiques à base d'isocyanates,
- formulation de revêtements, en particulier de peintures ou de vernis à hauts extraits secs en conformité avec les tendances et les réglementations en vigueur sur les COV,
- possibilité d'associer un deuxième agent réticulant réactif avec les fonctions hydroxy générées en position beta du groupement uréthane formé lors de la réaction de réticulation entre les fonctions amines d'une polyamine et les cycles carbonates (par ouverture) portés par ladite résine de l'invention et ainsi augmenter la densité de réticulation avec un système hybride par exemple par réaction avec des réticulants supplémentaires de type anhydride ou silane bloqué ou mélamine,
- possibilité d'utiliser comme agents réticulants des polyamines d'origine biosourcée, en particulier des polyamines grasses et donc d'augmenter le taux (la quantité) de carbone renouvelable dans la formulation avec une possibilité d'amélioration du cycle de vie du produit,
- possibilité de diminuer le coût global de la formulation,
- séchage rapide et maintien des bonnes propriétés du film de revêtement obtenu, malgré le faible taux de COV qui est généralement défavorable à un tel compromis pour les systèmes connus de l'état de la technique,
- bonnes performances d'application et en particulier, en termes de durabilité y compris en termes de corrosion, compromis dureté/flexibilité, adhérence sur substrat, résistance chimique et tenue thermique.

Par faible taux de COV, on considère dans la présente invention la présence réduite de composés organiques volatils, en particulier ayant une température d'ébullition (Teb) inférieure à 250°C et un taux inférieur à 420 g/l.

L'invention est telle que décrite dans les revendications.

Le premier objet de l'invention concerne ladite résine spécifique portant des groupements de carbonates cycliques.

Ensuite, l'invention couvre un procédé de préparation de ladite résine selon l'invention, soit comme une résine résultant directement de la polymérisation dudit mélange spécifique de monomères, soit une résine polyester modifiée par polymérisation dudit mélange en présence de cette résine polyester.

Un autre objet de l'invention est une solution en milieu solvant organique de ladite résine.

Un objet essentiel de l'invention concerne une composition réticulable comprenant ladite résine et un agent réticulant polyamine et plus particulièrement une composition de revêtement.

Un autre objet de l'invention concerne l'utilisation de ladite résine pour des compositions réticulables polyuréthanes sans usage d'isocyanates.

Finalement, la présente invention couvre un polyuréthane réticulé résultant de ladite résine ou d'une composition réticulable selon l'invention.

Donc, le premier objet de la présente invention concerne une résine soluble en milieu solvant organique, où soluble en milieu solvant organique signifie que ladite résine peut être mise en solution dans au moins un solvant organique ce qui signifie implicitement que ladite résine n'est pas réticulée (ni insoluble ni infusible) et donc indirectement de structure linéaire et/ou ramifiée, portant des groupements terminaux et/ou pendants de carbonate cyclique, en particulier avec une fonctionnalité correspondante d'au moins 2 et laquelle résine est un oligomère et/ou polymère, c'est-à-dire produit de polymérisation, basé sur, avec « basé sur» signifiant : qui est obtenu à partir de, un mélange a) de monomères comprenant :
a1) au moins un monomère éthyléniquement insaturé choisi parmi les esters (méth)acryliques issus d'un alcool aliphatique en C₁ à C₁₈, de préférence en C₁ à C12,
a2) au moins un monomère éthyléniquement insaturé a2.1) ou a2.2) comme définis ci-dessous :
   - a2.1) porteur d'une insaturation éthylénique (méth)acrylique, vinylique ou allylique, de préférence (méth)acrylique et (également) porteur d'au moins un groupement carbonate cyclique
   - a2.2) porteur d'une insaturation éthylénique de préférence (méth)acrylique, vinylique ou allylique, plus préférentiellement (méth)acrylique et également porteur d'un groupement réactif qui est le précurseur d'un groupement carbonate cyclique et avec ledit groupement précurseur étant transformé chimiquement par post modification sur l'oligomère ou polymère ainsi obtenu avant obtention dudit oligomère ou polymère (final transformé) en un groupement final de cycle carbonate ou en un groupement comprenant un cycle carbonate, ledit monomère a2.2) étant sélectionné parmi :
      - a2.2.1) : les esters (méth)acryliques d'alcool en C₁ ou C₂, de préférence en C₁, avec lesdits groupements esters dudit oligomère ou polymère étant post-transestérifiés (après polymérisation) par un alcool portant un cycle carbonate ou
      - a2.2.2) : les anhydrides ou acides carboxyliques éthyléniquement insaturés, avec les groupements anhydrides ou acides dudit oligomère ou polymère étant post-estérifiés par un alcool portant un cycle carbonate ou
      - a2.2.3) : les époxydes éthyléniquement insaturés avec lesdits groupements époxy dudit oligomère ou polymère étant transformés en cycle carbonate par post-réaction avec CO₂,
a3) au moins un monomère éthyléniquement insaturé a3.1), de préférence (méth)acrylique, comme définis ci-dessous :
   - a3.1) comporte au moins une structure cycloaliphatique sélectionnée parmi : norbornyle, isobornyle, t-butyl cyclohexyle, 3,3,5-triméthyl cyclohexyle, dicyclopentadiényle, décahydronaphtalényle
a4) en option, au moins un monomère vinyl aromatique
a5) en option au moins un monomère éthyléniquement insaturé, de préférence (méth)acrylique, porteur d'au moins un groupement carboxy, ledit groupement carboxy étant un groupement final dudit oligomère ou polymère et donc (par définition de a5)) ledit carboxy n'est pas utilisé comme précurseur d'un groupement portant un cycle carbonate selon la définition de a2.2.2).

Selon une option particulière de l'invention, ledit mélange a) des monomères comprend en plus, c'est-à-dire en plus de a1), a2), a3) et en option a4) et en option a5), au moins un monomère éthyléniquement insaturé a6), de préférence (méth)acrylique, porteur d'au moins un groupement fonctionnel sélectionné parmi : amide, acétoacétoxy, silane bloqué ou non bloqué, uréido, phosphate, phosphonate, phosphinate, sulfonate, oxazoline, époxy, hydroxy, ces deux derniers étant des groupements finaux dudit oligomère ou polymère.

Selon une autre option plus particulière, ledit mélange de monomères a) tel que défini ci-haut comprend en plus, c'est-à-dire en plus de a1), a2), a3) et en option a4) et en option a5) et en option a6) et en proportion minoritaire en poids, au moins une résine polyester, de préférence à base d'acides gras, en particulier résine alkyde et pouvant ainsi être modifiée chimiquement, en particulier greffée, par ledit mélange de monomères a), de préférence ladite résine polyester, en particulier alkyde, étant présente à un taux inférieur à 30% en poids du total desdits monomères a) + ladite résine polyester. Ainsi, selon cette option particulière, ledit mélange a) des monomères comprend ladite résine polyester comme définie ci-haut et des monomères a1) à a3), avec éventuellement un ou plusieurs monomères optionnels a4) à a6) et donne comme résultat une résine correspondante à base de ladite résine polyester et desdits monomères comprenant une résine polyester greffée au moins partiellement par lesdits monomères dudit mélange a).

En fonction du type de ladite résine polyester, en particulier résine alkyde, le taux minoritaire de cette résine polyester, en particulier alkyde, peut être inférieur à 20% et plus particulièrement inférieur à 10%.

Selon une option particulière préférée, le taux de monomère a3) varie de 15 à moins de 30% en poids par rapport au poids total de ladite résine et de préférence de 15 à 25%.

Est particulièrement préférée une résine définie selon l'invention, dans laquelle tous les monomères a1), a2), a3) et éventuellement a5) et a6), comme définis ci-haut sont exclusivement des monomères à insaturation éthylénique (méth)acrylique.

Selon une autre option particulière, ledit mélange de monomères a) et par conséquent ladite résine qui en résulte, ne comprend aucun des monomères a4), a5) et a6).

La résine selon l'invention peut avoir un taux de groupements carbonates cycliques exprimé en mmole/g d'au moins 0,35 (ce qui est équivalent à un indice d'hydroxyle I_{OH} d'environ 20 exprimé en mg KOH/g de résine sèche) et de préférence de 0,85 à 3,60 (équivalent I_{OH} de 48 à 202 mg KOH/g de résine sèche).

Selon une définition plus particulière de la résine selon l'invention, ledit monomère a2.1) peut être un ester d'un monoalcool comprenant (ou porteur de) un groupement de carbonate cyclique, de préférence un ester du carbonate de glycérol, avec un acide et/ou un anhydride carboxylique éthyléniquement insaturé, plus préférentiellement ledit acide et/ou anhydride étant sélectionné parmi l'acide et/ou l'anhydride correspondant à l'acide (méth)acrylique, l'acide (anhydride) maléique et fumarique, l'acide/anhydride itaconique, l'acide/anhydride tétrahydrophtalique, plus préférentiellement l'acide (méth)acrylique. Comme alcool comprenant ou porteur d'un carbonate cyclique convenable, on peut citer le carbonate de glycérol, de triméthylol propane, de sorbitol ou d'érythritol et de préférence le carbonate de glycérol. Le monomère a2.1) peut également être un monomère allylique et comme tel on peut citer comme exemple l'éther allylique du glycérol carbonate. Il peut aussi être un monomère vinylique par exemple tel que le 4-vinyl-1 ,3-dioxolan-one.

Un des monomères préférés parmi les monomères a2.1) est le (méth)acrylate du carbonate de glycérol. Ce monomère peut, par exemple, être préparé avec un degré de pureté élevé suivant le mode opératoire décrit dans l'exemple 1 de US 7,414,147.

Parmi les alcools portant un groupement carbonate, convenables pour la transestérification des groupements esters en C₁ et C₂ issus des monomères a2.2.1) ou convenables pour l'estérification des groupements anhydrides/acides des monomères a2.2.2) dudit mélange a), on peut citer le carbonate de glycérol, le carbonate de triméthylol propane, de sorbitol ou d'érythritol et de préférence le carbonate de glycérol.

Les monomères a2.2.2) sont en particulier choisis parmi l'acide (méth)acrylique, l'acide (anhydride) maléique et fumarique, l'acide/anhydride itaconique, l'acide/anhydride tétrahydrophtalique, plus préférentiellement l'acide (méth)acrylique.

Parmi les monomères époxydes a2.2.3) dudit mélange a) convenables pour la post-transformation de leurs groupements époxy en carbonates cycliques, on peut citer tous les monomères acryliques ou vinyliques ou allyliques porteurs d'une fonction époxy. Comme exemples particuliers de monomères acryliques époxydés, on peut citer le (méth)acrylate de glycidyle ((M)AGLY), le méthacrylate de dicyclopentadiène époxydé et comme monomères allyliques l'éther allylique de glycidyle.

Comme exemples de monomères vinyl aromatiques a4) convenables, on peut citer le styrène, vinyl toluènes (o-, m-,p-).

Comme exemples de monomères a5) convenables, on peut citer l'acide (méth)acrylique, l'acide (anhydride) maléique et fumarique, l'acide/anhydride itaconique, l'acide/anhydride tétrahydrophtalique, plus préférentiellement l'acide (méth)acrylique. Dans le cas de a5), il y a distinction par rapport aux monomères a2.2.2) servant de support à des groupements précurseurs aux carbonates cycliques car, dans ce dernier cas, les groupements acides ou anhydrides restent libres dans la résine finale. La présence et le taux de ces groupements acides/anhydrides dépendront de l'application et performances visées, par exemple de la nécessité ou non d'une réticulation supplémentaire à travers une réaction supplémentaire type acide/anhydride avec un agent réticulant de type époxy ou du besoin de dispersibilité de ladite résine finale en milieu aqueux.

Finalement, comme exemples convenables de monomères a6), on peut citer par fonction les suivants :
- amide : acrylamide, N-méthylolacrylamide, Iso-butoxyméthylacrylamide, N-butoxymeéthylacrylamide
- acétoacétoxy : (méth)acrylate d'éthyl acétoacétoxy, (méth)acrylate de propyl acétoacétoxy,
- silane : (méth)acryloxypropyltriméthoxysilane, (méth)acryloxypropyltriiso-propoxysilane, (méth)acryloxypropyltriéthoxysilane, vinyl triéthoxysilane, triméthoxysilane de vinyle, tris-(2-méthoxyethoxy)silane de vinyle, méthyldiméthoxysilane de vinyle,
- uréido : (méth)acrylates d'uréido, tels que le Norsocryl^{®} 102 ou Norsocryl^{®} 104 commercialisés par Arkema, le (méth)acrylamidoéthyl éthylène urée tel que le Sipomer^{®} WAM Il commercialisé par Rhodia ou monomère allyl uréido tel que le Sipomer^{®} WAM commercialisé par Rhodia,
- phosphate : (méth)acrylate de polyéthylène glycol (PEG) ester phosphate (monoester d'acide phosphorique avec mono(méth)acrylate de PEG) ou mono ester d'acide phosphorique et d'hydroxyalkyl (méth)acrylate ou monomère allylique d'éther phosphate (mono ester d'acide phosphorique avec l'alcool allylique) ou monoester d'acide phosphorique avec l'alcool vinylique,
- phosphinate : esters méthacryliques d'hydroxy alkyl (méth)acrylate avec l'acide phosphinique,
- phosphonate : esters méthacryliques d'hydroxy alkyl (méth)acrylate avec l'acide phosphonique,
- sulfonate : sulfonate de 2-acrylamide-2-methylpropane de sodium, 3-(allyloxy)-2-hydroxypropanesulfonate de sodium (Sipomer^{®} COPS-1, commercialisé par Rhodia), vinyl sulfonate de sodium,
- époxy (avec différence vs a2.2.3) : non conversion des fonctions époxys en carbonates): (méth)acrylate de glycidyle ((M)AGLY) ou méthacrylate de dicyclopentadiényl époxydé, éther allylique de glycidyle. L'intérêt de tels groupements époxy libres dans la résine est la possibilité d'un double système de réticulation via liaisons uréthanes (carbonate-amine de polyamine) et amine-époxy (amine polyamine) avec le même agent réticulant polyamine. Un tel système bicomposant (2k) réticulable par double réaction de réticulation est un système particulier également couvert par la présente invention,
- hydroxy : hydroxy alkyl (méth)acrylate, avec l'alkyle étant de préférence un éthyle, propyle ou butyle. L'intérêt de cette présence de fonction libre OH est lié à la possibilité de réticulation supplémentaire par mélamine ou silanes.

Plus préférentiellement, les monomères a6) portent des fonctions parmi : acétoacétoxy, silane bloqué, uréido, phosphate, phosphinate, phosphonate, époxy ou hydroxy.

D'une manière générale, les divers monomères a5) et a6) sont choisis de telle manière que leurs groupements fonctionnels respectifs ne puissent pas réagir entre eux, y compris dans le cas où plusieurs monomères a6) sont présents mais avec des groupements fonctionnels différents et non réactifs entre eux, ni réactifs d'une manière générale avec les groupements des monomères a2).

Dans le cas où des monomères de structure ramifiée sont utilisés, comme monomères a1), ils sont différents des monomères a3.2) suivants : monomère éthyléniquement insaturé comportant au moins une structure aliphatique ramifiée comprenant au moins 4 et jusqu'à 18 atomes de carbone avec au moins un carbone étant quaternaire, de préférence parmi le (méth)acrylate de t-butyle et/ou (méth)acrylate du glycidyl ester de l'acide diméthyl-2,2 caprylique ou le (méth)acrylate du glycidyl ester de l'acide néodécanoique, l'ester vinylique branché d'acide versatique, en particulier comportant 9 ou 10 atomes de carbone dont un quaternaire, plus préférentiellement a3.2) étant le (méth)acrylate de t-butyle et/ou le (méth)acrylate du glycidyl ester de l'acide diméthyl-2,2 caprylique et/ou le (méth)acrylate du glycidyl ester de l'acide néodécanoique.

Il est clair, selon l'invention, que ladite résine selon l'invention est obtenue par réaction de polymérisation, en particulier par voie radicalaire en solution en milieu solvant organique dudit mélange de monomères a) comme défini ci-haut.

Concernant les masses moléculaires moyennes en nombre Mn telles que mesurées par GPC, exprimées en équivalents Polystyrène dans le THF, elles peuvent varier pour Mn de 500 à 5000, de préférence de 500 à 4000. Plus particulièrement, la Mn de la résine de l'invention peut varier de 500 à 4000, plus préférentiellement de 500 à 3000 et la Mn de ladite résine polyester en particulier alkyde, quand celle-ci est présente selon option particulière dans ledit mélange a) des monomères pour préparer la résine correspondante selon l'invention, peut varier de 500 à 2000 et plus préférentiellement de 750 à 1500.

Le deuxième objet de l'invention couvre un procédé de préparation d'une résine telle que définie ci-haut selon l'invention, lequel comprend au moins une étape de polymérisation i), de préférence par voie radicalaire, d'un mélange de monomères a) avec a2) étant sélectionné parmi les monomères a2.1) ou a2.2) comme définis ci-haut.

Selon un mode plus particulier, ledit procédé de préparation de la résine, comprend au moins une étape de polymérisation i), de préférence par voie radicalaire, dudit mélange de monomères a) comprenant un monomère a2) sélectionné parmi les monomères tels que définis selon a2.2) et une étape supplémentaire ii) de modification chimique desdits groupements précurseurs en groupements portant un cycle carbonate, comme défini ci-haut selon a2.2).

Ensuite, selon une autre option particulière dudit procédé selon l'invention, ledit procédé peut comprendre la polymérisation dudit mélange de monomères a), lequel comprend en plus (c'est-à-dire en plus de a1), a2) et a3) et en option d'au moins un parmi a4), a5) ou a6)), en proportion minoritaire ladite résine polyester, en particulier alkyde, de préférence à un taux inférieur à 30% en poids du poids total résine polyester + monomères a), avec polymérisation et éventuel greffage, de préférence radicalaire en milieu solvant. Cela signifie que ce qui caractérise ledit procédé selon cette option particulière est le fait que ledit mélange de monomères a) comprend en plus, en proportion minoritaire ladite résine polyester. Greffage signifie plus particulièrement ici le greffage par liaison covalente entre ladite résine polyester, en particulier alkyde et lesdits monomères du mélange a), c'est-à-dire les monomères a1), a2), a3) et en option au moins un des monomères a4), a5) ou a6), par copolymérisation des monomères dudit mélange a), plus particulièrement avec les éventuelles insaturations éthyléniques de ladite résine polyester, c'est particulièrement le cas pour une résine alkyde ou par greffage sur des hydrogènes labiles de ladite structure polyester.

Dans le cas de présence dans ledit mélange a) de monomères a2.2) porteurs de groupements précurseurs desdits groupements comprenant des carbonates cycliques, ledit procédé comprend en plus une étape de post-modification desdits groupements précurseurs en groupements finaux carbonates cycliques comme défini ci-haut pour la résine de l'invention et pour les monomères a2.2.1), a2.2.2) et a2.2.3).

La fonctionnalité moyenne en nombre en groupements carbonates cycliques par chaîne de ladite résine de l'invention est d'au moins 2.

Un autre objet de l'invention est une solution de résine dans un solvant organique, laquelle solution comprend au moins 50%, de préférence au moins 60% et plus préférentiellement de 60 à 95% et encore plus préférentiellement de 68 à 90% en poids de ladite résine, telle que définie selon l'invention ci-haut ou résine obtenue par un procédé tel que défini ci-haut selon l'invention.

Selon une option particulière dans ladite solution, ledit solvant organique est sélectionné parmi : les cétones, en particulier l'acétone, butanone, méthyl éthyl cétone, méthyl amyl cétone, méthyl isobutyl cétone, cyclohexanone, les esters d'acides acétique et propionique, en particulier l'acétate d'éthyle, acétate de butyle, acétate d'isoamyle, acétate de pentyle, éthyl 3-ethoxy proprionate d'éthyle, les esters d'acides dicarboxyliques, tels que l'acide adipique, glutarique et succinique et de méthanol, d'éthanol, d'(iso)propanol, d'(iso)butanol, les solvants aromatiques tels que les coupes lourdes ou légères pétrolières ayant des plages respectives de points d'ébullition de 180 - 215°C et de 150 - 180°C, le toluène et le xylène et ses isomères, les solvants aliphatiques tels que l'isophorone ou l'heptane, les alcools, en particulier l'éthylène glycol (EG), le propylène glycol (PG), éthanol, propanol, butanol, pentanol, hexanol, heptanol et leurs isomères correspondants ou le glycérol, les éthers de glycols, en particulier, le 2-butoxyethanol (Butyl Cellolsolve), l'acétate de propylène glycol méthyl éther (Dowanol^{®} PMA), méthyl éther de propylène glycol (Dowanol^{®} PM), n-butyl éther de propylène glycol (Dowanol^{®} PnB), n-propyl éther de propylène glycol (Dowanol^{®} DPM), n-butyl éther du dipropylène glycol (Dowanol^{®} DPnB), les solvants avec hétéro-atomes en particulier, le diméthyl sulfoxide (DMSO), N-éthyl pyrrolidone (NEP), tétrahydrofuranne (THF) ou les mélanges binaires et ternaires desdits solvants cités ci-haut, sous condition de compatibilité entre lesdits solvants. Compatibilité entre 2 ou 3 solvants signifie l'absence de démixtion (séparation en 2 phases au moins pour mélanges binaires et ternaires) à température ambiante aux proportions utilisées.

Un autre objet de l'invention concerne une composition réticulable laquelle comprend un solvant organique et au moins une résine telle que définie plus haut selon l'invention ou obtenue par un procédé tel que défini ci-haut selon l'invention et au moins un agent réticulant choisi parmi les polyamines présent lors de la réticulation. Plus particulièrement, cette composition comprend ladite polyamine, laquelle a une fonctionnalité d'au moins 2 et ladite polyamine est sélectionnée parmi les polyamines monomères et/ou oligomères, de préférence avec lesdits oligomères ayant une masse moyenne en nombre Mn ne dépassant pas 1500, plus préférentiellement pas plus de 1000. Encore plus particulièrement, ladite composition réticulable comprend une polyamine comme décrit ci-haut, qui porte des fonctions amines primaires ou secondaires et est sélectionnée parmi les polyamines de structure aliphatique ou cycloaliphatique et éventuellement de structure aromatique suivant l'utilisation finale. La fonctionnalité de ladite polyamine est adaptée à celle de ladite résine de l'invention en carbonates cycliques. Quand ladite résine a une fonctionnalité (moyenne en nombre) de 2, dans ce cas la fonctionnalité de ladite polyamine doit être supérieure à 2 pour la réticulation. Des mélanges de polyamines peuvent être utilisés auquel cas la fonctionnalité considérée sera la moyenne en nombre dudit mélange de polyamines. Selon une option plus particulière, ladite polyamine est une polyamine grasse en C₁₂ à C₅₄, de préférence en C₁₂ à C₂₂ et/ou est une polyamine à base de polyéther par exemple de type Jeffamine^{®} et/ou une polyamine à base de polyalkylèneimines et/ou une polyamine à base d'oligomères acryliques avec pour lesdites polyamines à base de polyéthers, polyalkylèneimines ou d'oligomères acryliques une Mn inférieure à 1000.

Ladite polyamine est un oligomère acrylique qui résulte de la copolymérisation d'un monomère acrylique porteur d'une fonction amine primaire ou secondaire avec un autre comonomère acrylique. Ledit monomère ou comonomère acrylique est en particulier un méthacrylate, afin d'éviter les réactions d'addition de Michael qui conduiraient à une structure réticulée, sinon ladite fonction amine est sous forme bloquée et non réactive avec un acrylate si ledit monomère est un acrylate. Ledit oligomère peut être utilisé avec la fonction amine sous forme bloquée, sinon avec la fonction débloquée après obtention dudit oligomère et en fonction du besoin lors de l'application.

En particulier dans le cas d'une composition réticulable qui doit se comporter comme une composition monocomposante (notée 1k), c'est-à-dire être stable au stockage à l'ambiante avant utilisation en application, ladite polyamine peut être sous forme bloquée avec un agent bloquant et pourrait se débloquer par exemple par chauffage après séchage du film qui en résulte. Les groupements amines desdites polyamines peuvent ainsi être bloqués sous forme de groupements bloqués comme : aldimines, kétimines, oxazolidines, hexahydropyrimidines, tétrahydroimidazoles et leurs mélanges.

Dans le cas où ladite polyamine n'est pas bloquée, ladite composition réticulable se comporte comme une composition bicomposante (2k) avec un système qui évolue au fur et à mesure que la réaction avance. La composition 2k est ainsi instable au stockage avec un temps ouvert limité et par conséquent l'addition de ladite polyamine sous forme non bloquée doit avoir lieu juste avant l'application et l'utilisation finale sur place au lieu d'application.

Le rapport des groupements amines (primaires ou secondaires) sur carbonates est ajusté de sorte qu'il n'y ait pas d'excès en amine, avec des rapports qui peuvent aller jusqu'à 1 et de préférence varient de 0,8 à 1.

Selon une option préférée, ladite composition réticulable a un taux d'extrait sec (ou taux de solides) sur la base de ladite résine telle que définie ci-haut ou telle qu'obtenue par un procédé tel que défini ci-dessus selon l'invention et dudit agent réticulant polyamine, supérieur à 20% et de préférence allant de 60 à 85%, plus préférentiellement de 65 à 85% en poids. Cela signifie que ce taux de solides ou extrait sec représente le taux de liant résine réticulable, résine + agent réticulant polyamine, selon l'invention. Dans le cas des compositions qui sont des vernis, ce taux correspond parfaitement au taux courant de solides ou d'extrait sec du vernis, qui correspond au taux de liant réticulable (résine + agent réticulant). Dans le cas des peintures ou d'autres compositions réticulables et dans le cas de présence d'autres solides comme des charges additifs et/ou des pigments, le taux de solides réel correspond au taux de liant résine réticulable selon l'invention (résine + agent réticulant polyamine) avec en plus le taux d'autres additifs et charges ou pigments qui peut varier en fonction du type d'application. Cependant, le taux de solides correspondant au liant résine réticulable de l'invention (résine + agent réticulant polyamine) est de préférence dans la plage supérieure à 20% en poids de la composition et plus particulièrement se situe de 60 à 85% en poids.

Selon un cas encore plus préféré, la composition réticulable selon l'invention est une composition de revêtement, plus particulièrement un revêtement de protection et plus particulièrement d'anticorrosion et encore plus particulièrement une peinture ou un vernis.

Ce type de revêtements peut servir en particulier pour des applications de revêtement de protection, en particulier de revêtement de finition (en anglais « top coat ») de haute résistance à l'usure et abrasion et/ou d'usage intensif dans des conditions climatiques d'usage externe continu sévères, en particulier dans les domaines d'application suivants : construction et rénovation, dans les domaines ferroviaire (TGV, métro, RER), automobile, transport routier, naval, aéronautique, de machines agricoles, d'engins de travaux publics, d'éoliennes, plateformes pétrolières, containers, d'édifices métalliques, d'armatures métalliques, du bâtiment ou du coil.

L'invention couvre également l'utilisation d'au moins une résine comme définie ci-haut ou obtenue par un procédé tel que défini selon l'invention pour la préparation de polyuréthanes réticulés sans aucune utilisation d'isocyanate. Cette utilisation s'applique plus particulièrement aux revêtements, de préférence aux revêtements pour substrats sélectionnés parmi : métal, bois y compris aggloméré, carton, béton, céramique, verre, plastique ou composite.

Un dernier objet couvert par la présente invention concerne un polyuréthane réticulé qui résulte d'une résine telle que définie ci-haut ou obtenue par un procédé de l'invention ou d'une composition réticulable comme décrite ci-haut selon l'invention.

Les exemples qui suivent sont donnés à titre d'illustration de l'invention et de ses avantages, sans impliquer une limitation quelconque de sa couverture.

### Partie expérimentale

### 1) Matières premières utilisées : ces matières sont présentées au tableau 1 ci-dessous

**Tableau 1 : matières premières utilisées**

| Nom chimique ou nom commercial produit | Nom abrégé utilisé dans description | Fournisseur | Fonction dans composition de résine |
|---|---|---|---|
| Styrène | STY | Total | Monomère a4) |
| Acrylate de butyle | ABU | Arkema | Monomère a1) |
| Méthacrylate de méthyle | MAM | Arkema | Monomère a1) |
| Méthacrylate de carbonate de glycérol* | GCM | - | Monomère a2) |
| Méthacrylate d'isobornyle | MAISOBOR | Evonik | Monomère a3.1) |
| Acrylate de 2-hydroxyéthyle | HEA | BASF | Monomère résine standard |
| Luperox^{®} DI | DTBP | Arkema | Générateur de radicaux |
| Luperox^{®} 26 | TBPO | Arkema | Générateur de radicaux |
| Ektapro^{®} EEP (3-éthoxypropionate d'éthyle) | EEP | Aldrich | Solvant |
| Acétate de Butyle | - | Brenntag | Solvant |
| Ethylènediamine | EDA | Aldrich | Réticulant C) |
| Tolonate^{®} HDT-LV2 | - | Perstorp | Réticulant isocyanate pour résine standard |
| TIB KAT 218 (Dilaurate de dibutyl étain) | DBTDL | TIB Chemicals | Catalyseur pour système standard polyol-isocyanate |

| | | | |
|---|---|---|---|
| * GCM : selon exemple 1 de US 7,414,147, autre nom GCM : méthacrylate de propylène carbonate | | | |

### 2) Préparation de résines porteuses de fonctions carbonates cycliques

Les exemples exposés ci-dessous illustrent cette préparation selon l'invention et avec exemples comparatifs de référence.

### Exemple 1 selon l'invention

Dans un réacteur de 2000 mL est introduit du 3-éthoxypropionate d'éthyle (218 g). Sous balayage d'azote, le réacteur est porté à 150°C. En parallèle, 148 g de styrène, 124 g d'acrylate de butyle, 9,8 g de méthacrylate de méthyle, 239 g de méthacrylate de propylène carbonate (ou méthacrylate de carbonate de glycérol) et 130 g de méthacrylate d'isobornyle sont mélangés. Est préparée également une solution de peroxyde de ditertiobutyle DTBP (24,7 g) et de peroctoate de tertiobutyle TBPO (9,8 g) dans du 3-éthoxypropionate d'éthyle (47 g). Ces deux préparations sont alors introduites en parallèle dans le réacteur sur une période de 7h30, la température étant maintenue à 150°C tout au long de cette période sous balayage d'azote. A la fin de ces additions, le milieu est gardé à la même température pendant 1 h avant d'être refroidi à température ambiante. L'extrait sec final de la résine est alors de 70,1% et sa viscosité, mesurée à 25°C selon la norme ISO3219, est de 12,5 Pa.s (125 P).

### Exemple 2 comparatif, en dehors de l'invention

Les conditions sont identiques à celles décrites dans l'exemple 1 sauf que la composition du mélange de monomères est différente comme indiqué dans le tableau 2 ci-dessous.

La résine finale obtenue présente un extrait sec de 70,3% et une viscosité à 25°C de 32,3 Pa.s (323 P). Par dilution avec le 3-éthoxypropionate d'éthyle, l'extrait sec peut être réduit à 69,0%, la viscosité mesurée est de 31,2 Pa.s (312 P).

### Exemple 3 comparatif hors invention

Cet essai a été réalisé avec le ratio des comonomères STY/ABU/MAM maintenu constant (voir tableau 2) par rapport à l'essai de l'exemple 1 selon l'invention.

### Exemples 4 et 5, comparatifs hors invention

Les conditions sont identiques à celles décrites dans l'exemple 1 sauf que la composition du mélange de monomères est différente comme indiqué dans le tableau 2 ci-dessous.

**Tableau 2 : Composition des résines préparées**

| Composition (% en poids) | Exemple 1 invention | Exemple 2 comparatif | Exemple 3 comparatif | Exemple 4 comparatif | Exemple 5 comparatif |
|---|---|---|---|---|---|
| STY | 22,7 | 22,7 | 33,2 | 22,7 | 22,7 |
| ABU | 19,0 | 19,0 | 27,8 | 19,0 | 19,0 |
| MAM | 1,5 | 21,5 | 2,2 | 35,4 | 35,4 |
| GCM | 36,8 | 36,8 | 36,8 | - | 22,9 |
| MAISOBOR | 20,0 | - | - | - | - |
| HEA | - | - | - | 22,9 | - |
| AA | - | - | - | - | - |
| Caractéristiques | | | | | |
| Fonctionnalité carbonate (mmol/g)** | 2,0 | 2,0 | 2,0 | 2,0* | 1,2 |
| Extrait sec (%) | 70,1 | 70,3 | 69,5 | 68,7 | 69,3 |
| Viscosité (Pa.s/P) | 12,5/125 | 32,3/323 | 17,0/170 | 5,2/52 | 14,1/141 |
| Aspect | Clair | Légèrement trouble | Trouble | Clair | Clair |

| | | | | | |
|---|---|---|---|---|---|
| * fonctionnalité OH (mmole/g) ** par g de résine sèche | | | | | |

### 3) Préparation de compositions réticulables 2k et réticulation

### 3.1) Formulation utilisée : voir tableau 3 ci-dessous

**Tableau 3 : compositions de la formulation 2k réticulable (en g) et caractéristiques**

| | Vernis 1 (invention) | Vernis 2 (comparatif) | Vernis 3 (comparatif) | Vernis 4 (comparatif ) | Vernis 5 (comparatif) |
|---|---|---|---|---|---|
| Résine Exemple 1 | 50 | / | / | / | / |
| Résine Exemple 2 | / | 50 | / | / | / |
| Résine Exemple 3 | / | / | 50 | / | / |
| Résine Exemple 4 | / | / | / | 50 | / |
| Résine Exemple 5 | / | / | / | / | 50 |
| Amine (Ethylendiamine (EDA)) | 2,11 | 2,11 | 2,09 | / | 1,17 |
| Isocyanate (Tolonate HDT-LV2) | / | / | / | 11,44 | / |
| Acétate de butyle | 9,5 | 14,3 | 12,2 | 11,8 | 13,0 |
| Catalyseur (solution à 1% de DBTDL dans l'acétate de butyle) | / | / | / | 1,37 | / |
| Viscosité (mPa.s), CAP 1000 (mobile n°3) T = 25°C (ISO 2884-1) | 288 | 301 | 285 | 285 | 284 |
| Densité à 20°C selon ISO 2811 | 1,04 | 1,03 | 1,04 | 1,05 | 1,05 |
| Extrait sec % (ISO 3251) | 60,4 | 56,1 | 57,3 | 61,4 | 55,8 |
| COV (g/l) | 412 | 452 | 444 | 406 | 464 |

### 3.2) Conditions opératoires de préparation des formulations et de la réticulation

Le mode opératoire général de préparation des formulations de vernis est le suivant :
On verse dans un récipient cylindrique les quantités de liants (résine et reticulant) comme préparés ci-avant. Le milieu est ensuite agité (avec Dispermat^{®} CV) à température ambiante (20-25°C). Nous procédons ensuite à la dilution de ce mélange avec de l'acétate de butyle afin d'obtenir une viscosité haut gradient (Viscosité CAP 1000, mobile N°3, T = 25°C) de 290 ± 20 mPa.s. La formulation de vernis est ensuite appliquée sur un support acier type QD46 avec un applicateur Barecoater (Vitesse 3 = 20 mm/s) afin d'obtenir une épaisseur sèche contrôlée de 30-40 µm. Le vernis ainsi appliqué est conditionné à une température de 23°C, sous humidité relative (HR) contrôlée de 50%.

### 4) Tests et méthodes utilisées pour caractériser les résines et les performances des revêtements réticulés obtenus (conditions opératoires)

### 4.1) Mesure de l'extrait sec d'une résine solvantée (méthode ISO3251)

1 g de résine est introduit et correctement étalé dans une coupelle en aluminium. La coupelle est ensuite placée dans une étuve à 125°C et séchée pendant 1 h. L'extrait sec est obtenu en calculant le rapport de la masse sèche sur la masse de résine initiale.

### 4.2) Mesure de la viscosité (norme ISO3219)

La viscosité des résines solvantées (en solution) est mesurée à l'aide d'un Brookfield LVDV-I+, mobile S34, à 25°C.

### 4.3) Test de séchage hors poussières : selon la méthode ISO 1517

Le principe est le suivant : à l'aide de fines billes de verre calibrées (granulométrie 125 / 250 µm), on détermine le moment à partir duquel celles-ci ne restent plus collées au support recouvert de peinture ou de vernis. On place le support recouvert de la peinture ou du vernis dans la salle climatisée (50% RH / 23°C). Après un certain temps, au terme duquel on considère que le revêtement a suffisamment réagi, on prélève une spatule de billes de verre (environ 0,5 g) et on les verse sur la peinture (ou vernis) appliquée à l'aide d'un petit tuyau de 10 cm de hauteur. Au bout de 10 secondes, on incline le support de 20° et on enlève les billes de verre à l'aide du pinceau fin. Si celles-ci ne restent pas collées, on considère la peinture sèche « hors poussières » à la durée correspondante de séchage (après application). Dans le cas contraire, on effectue un autre essai quelques minutes plus tard et ainsi de suite jusqu'à ce qu'aucune bille ne colle à la surface du revêtement pour noter la durée de séchage hors poussières.

### 4.4) Test de dureté : selon la méthode ISO 1522

Il s'agit d'une dureté Persoz réalisée à 23°C et à 50% d'humidité relative. Les vernis sont appliqués sur acier type QD36 (Q-Panel) puis laissés dans les conditions décrites ci-dessus (23°C et à 50% d'humidité relative) pour une période de 7 jours. Les mesures sont réalisées après 1 jour, 4 jours et 7 jours de séchage.

### 5) Performances des revêtements (vernis) réticulés 2k

Les performances d'application sont présentées au tableau comparatif 4 ci-dessous.

**Tableau 4 : récapitulatif des performances des revêtements (vernis) 2 k obtenus**

| | Vernis 1 invention | Vernis 2 comparatif | Vernis 3 comparatif | Vernis 4 comparatif | Vernis 5 comparatif |
|---|---|---|---|---|---|
| Epaisseur film sec (µm) | 35 +/-1 | 35 +/-1 | 34 +/-1 | 39 +/-1 | 35 +/-1 |
| Séchage hors poussières | 0h57 | 0h50 | 0h37 | 1h12 | 1h18 |
| Dureté Persoz 1 jour | 112 | 89 | 110 | 89 | 79 |
| Dureté Persoz 4 jours | 182 | 112 | 125 | 190 | 116 |
| Dureté Persoz 7 jours | 194 | 156 | 200 | 210 | 155 |

## Revendications

1. Résine soluble en milieu solvant organique et non réticulée, portant des groupements terminaux et/ou pendants de carbonate cyclique, en particulier avec une fonctionnalité d'au moins 2, **caractérisée en ce que** ladite résine est un oligomère et/ou polymère, basé sur un mélange a) de monomères comprenant :
a1) au moins un monomère éthyléniquement insaturé choisi parmi les esters (méth)acryliques issus d'un alcool aliphatique en C₁ à C₁₈, de préférence en C₁ à C12,
a2) au moins un monomère éthyléniquement insaturé a2.1) ou a2.2) comme définis ci-dessous :
- a2.1) porteur d'une insaturation éthylénique (méth)acrylique, vinylique ou allylique, de préférence (méth)acrylique et porteur d'au moins un groupement carbonate cyclique
- a2.2) porteur d'une insaturation éthylénique de préférence (méth)acrylique, vinylique ou allylique, plus préférentiellement (méth)acrylique et porteur d'un groupement réactif qui est le précurseur d'un groupement carbonate cyclique et avec ledit groupement précurseur étant transformé chimiquement par post modification sur l'oligomère ou polymère ainsi obtenu avant obtention dudit oligomère ou polymère en un groupement final de cycle carbonate ou en un groupement comprenant un cycle carbonate, ledit monomère a2.2) étant sélectionné parmi :
- a2.2.1) : les esters (méth)acryliques d'alcool en C₁ ou C₂, de préférence en C₁, avec lesdits groupements esters dudit oligomère ou polymère étant post-transestérifiés par un alcool portant un cycle carbonate ou
- a2.2.2): les anhydrides ou acides carboxyliques éthyléniquement insaturés, avec les groupements anhydrides ou acides dudit oligomère ou polymère étant post-estérifiés par un alcool portant un cycle carbonate ou
- a2.2.3): les époxydes éthyléniquement insaturés avec lesdits groupements époxy dudit oligomère ou polymère étant transformés en cycle carbonate par post-réaction avec CO₂,
a3) au moins un monomère éthyléniquement insaturé a3.1), de préférence (méth)acrylique, comme défini ci-dessous :
- a3.1) comporte au moins une structure cycloaliphatique sélectionnée parmi : norbornyle, isobornyle, t-butyl cyclohexyle, le 3,3,5-triméthyl cyclohexyle, dicyclopentadiényle et décahydronaphtalényle
a4) en option, au moins un monomère vinyl aromatique
a5) en option au moins un monomère éthyléniquement insaturé, de préférence (méth)acrylique, porteur d'au moins un groupement carboxy, ledit groupement carboxy étant un groupement final dudit oligomère ou polymère et donc ledit carboxy n'est pas utilisé comme précurseur d'un groupement portant un cycle carbonate selon la définition de a2.2.2).

2. Résine selon la revendication 1, **caractérisée en ce que** ledit mélange de monomères a) comprend en plus au moins un monomère éthyléniquement insaturé a6), de préférence (méth)acrylique, porteur d'au moins un groupement fonctionnel sélectionné parmi : amide, acétoacétoxy, silane bloqué ou non bloqué, uréido, phosphate, phosphonate, phosphinate, sulfonate, oxazoline, epoxy, hydroxy, ces deux derniers étant des groupements finaux dudit oligomère ou polymère.

3. Résine selon la revendication 1 ou 2, **caractérisée en ce que** ledit mélange a) comprend en plus et en proportion minoritaire en poids au moins une résine polyester, de préférence à base d'acides gras, en particulier résine alkyde et pouvant ainsi être modifiée chimiquement, en particulier greffée, par ledit mélange de monomères a), de préférence ladite résine polyester, en particulier alkyde, étant présente à un taux inférieur à 30% en poids du total desdits monomères a) + ladite résine polyester.

4. Résine selon l'une des revendications 1 à 3, **caractérisée en ce que** le taux de groupements carbonates cycliques exprimé en mmole/g est d'au moins 0,35 et de préférence de 0,85 à 3,60.

5. Résine selon l'une des revendications 1 à 4, **caractérisée en ce que** ledit monomère a2.1) est un ester de monoalcool comprenant un groupement de carbonate cyclique, de préférence un ester du carbonate de glycérol avec un acide et/ou anhydride carboxylique éthyléniquement insaturé, plus préférentiellement ledit acide et/ou anhydride étant sélectionné parmi l'acide et/ou l'anhydride correspondant à l'acide (méth)acrylique, l'acide/anhydride maléique et fumarique, l'acide/anhydride itaconique, l'acide/anhydride tétrahydrophtalique, plus préférentiellement l'acide (méth)acrylique.

6. Résine selon l'une des revendications 1 à 5, **caractérisée en ce que** tous les monomères a1), a2), a3) et éventuellement a5) et a6) sont exclusivement des monomères à insaturation éthylénique (méth)acrylique.

7. Résine selon l'une des revendications 1 à 6, **caractérisée en ce que** le taux en poids dudit monomère a3) dans ladite résine varie de 15 à moins de 30% et de préférence de 15 à 25%.

8. Procédé de préparation d'une résine telle que définie selon l'une des revendications 1 à 7, **caractérisé en ce qu'**il comprend au moins une étape de polymérisation i), de préférence par voie radicalaire, dudit mélange de monomères a) avec a2) sélectionné parmi les monomères a2.1) ou a2.2).

9. Procédé selon la revendication 8, **caractérisé en ce qu'**il comprend au moins ladite étape de polymérisation i), de préférence par voie radicalaire, dudit mélange de monomères a) comprenant un monomère a2) sélectionné parmi les monomères tels que définis selon a2.2) et une étape supplémentaire ii) de modification chimique desdits groupements précurseurs en groupements portant un cycle carbonate, comme défini selon a2.2) et la revendication 1.

10. Procédé selon l'une des revendications 8 ou 9, **caractérisé en ce qu'**il comprend la polymérisation dudit mélange de monomères a), lequel comprend en plus en proportion minoritaire une résine polyester, en particulier alkyde, de préférence à un taux inférieur à 30% en poids du poids total résine polyester + monomères a), avec polymérisation et éventuel greffage, de préférence radicalaire en milieu solvant.

11. Solution de résine dans un solvant organique, **caractérisée en ce qu'**elle comprend au moins 50%, de préférence au moins 60% et plus préférentiellement de 60 à 95% et encore plus préférentiellement de 68 à 90% en poids de résine, telle que définie selon l'une des revendications 1 à 7 ou obtenue par un procédé tel que défini selon l'une des revendications 8 à 10.

12. Solution selon la revendication 11, **caractérisée en ce que** ledit solvant organique est sélectionné parmi : les cétones, en particulier l'acétone, butanone, méthyl éthyl cétone, méthyl amyl cétone, méthyl isobutyl cétone, cyclohexanone, les esters d'acides acétique et propionique, en particulier l'acétate d'éthyle, acétate de butyle, acétate d'isoamyle, acétate de pentyle, éthyl 3-ethoxy proprionate d'éthyle, les esters d'acides dicarboxyliques et de méthanol, d'éthanol, d'(iso)propanol, d'(iso)butanol, les solvants aromatiques tels que les coupes lourdes ou légères pétrolières ayant des plages respectives de points d'ébullition de 180-215°C et de 150-180°C, le toluène, le xylène et ses isomères, les solvants aliphatiques tels que l'isophorone ou l'heptane, les alcools, en particulier l'éthylène glycol, le propylène glycol, éthanol, propanol, butanol, pentanol, hexanol, heptanol et leurs isomères correspondants ou le glycérol, les éthers de glycols, en particulier, le 2-butoxyethanol, l'acétate de propylène glycol méthyl éther, méthyl éther de propylène glycol, n-butyl éther de propylène glycol, n-propyl éther de propylène glycol, n-butyl éther du dipropylène glycol, les solvants avec hétéro-atomes en particulier, le diméthyl sulfoxide, N-éthyl pyrrolidone, tétrahydrofuranne ou mélanges binaires et ternaires desdits solvants si compatibles entre eux.

13. Composition réticulable comprenant un solvant organique, **caractérisée en ce qu'**elle comprend au moins une résine telle que définie selon l'une des revendications 1 à 7 ou obtenue par un procédé tel que défini selon l'une des revendications 8 à 10 et au moins un agent réticulant choisi parmi les polyamines.

14. Composition selon la revendication 13, **caractérisée en ce que** ladite polyamine a une fonctionnalité d'au moins 2 et que ladite polyamine est sélectionnée parmi les polyamines monomères et/ou oligomères, de préférence lesdits oligomères ayant une masse moyenne en nombre Mn ne dépassant pas 1500, plus préférentiellement pas plus de 1000.

15. Composition selon la revendication 13 ou 14, **caractérisée en ce que** ladite polyamine porte des fonctions amines primaires ou secondaires et qu'elle est sélectionnée parmi les polyamines de structure aliphatique ou cycloaliphatique et éventuellement aromatique.

16. Composition selon l'une des revendications 13 à 15, **caractérisée en ce que** ladite polyamine est une polyamine grasse en C₁₂ à C₅₄, de préférence en C₁₂ à C₂₂ et/ou une polyamine à base de polyéther et/ou une polyamine à base de polyalkylèneimine et/ou une polyamine à base d'oligomères acryliques avec pour lesdites polyamines à base de polyéthers, polyalkylèneimines ou d'oligomères acryliques une Mn inférieure à 1000.

17. Composition selon l'une des revendications 13 à 15, **caractérisée en ce que** ladite polyamine est un oligomère acrylique résultant de la copolymérisation d'un monomère acrylique porteur d'une fonction amine primaire ou secondaire.

18. Composition selon l'une des revendications 13 à 17, **caractérisée en ce que** ladite composition est une composition à comportement monocomposant, avec ladite polyamine étant bloquée par un agent bloquant.

19. Composition selon l'une des revendications 13 à 18, **caractérisée en ce que** le taux d'extrait sec de ladite résine telle que définie selon l'une des revendications 1 à 7 ou obtenue par un procédé tel que défini selon l'une des revendications 8 à 10 et dudit agent réticulant polyamine est supérieur à 20%, de préférence de 60 à 85% et plus préférentiellement 65 à 85% en poids.

20. Composition selon l'une des revendications 13 à 19, **caractérisée en ce qu'**il s'agit d'une composition de revêtement, en particulier de revêtement de protection.

21. Composition selon l'une des revendications 13 à 20, **caractérisée en ce qu'**elle a un taux de composés organiques volatils inférieur à 420 g/I.

22. Utilisation d'au moins une résine telle que définie selon l'une des revendications 1 à 7 ou obtenue par un procédé tel que défini selon l'une des revendications 8 à 10, **caractérisée en ce qu'**elle est pour la préparation de polyuréthanes réticulés sans aucune utilisation d'isocyanate.

23. Utilisation selon la revendication 22, **caractérisée en ce qu'**il s'agit de revêtements, de préférence des revêtements pour substrats sélectionnés parmi : métal, bois y compris aggloméré, carton, béton, céramique, verre, plastique ou composite.

24. Polyuréthane réticulé, **caractérisé en ce qu'**il résulte d'une résine telle que définie selon l'une des revendications 1 à 7 ou obtenue par un procédé tel que défini selon l'une des revendications 8 à 10 ou d'une composition réticulable telle que définie selon l'une des revendications 13 à 21.

## Patentansprüche

1. Harz, das in organischen Lösungsmittelmedien löslich und unvernetzt ist und endständige und/oder seitenständige cyclische Carbonatgruppen trägt, insbesondere mit einer Funktionalität von mindestens 2, **dadurch gekennzeichnet, dass** es sich bei dem Harz um ein Oligomer und/oder Polymer auf Basis einer Mischung a) von Monomeren handelt, welche Folgendes umfasst:
a1) mindestens ein ethylenisch ungesättigtes Monomer, ausgewählt aus (Meth)acrylsäureestern, die sich von einem aliphatischen C₁- bis C₁₈- und vorzugsweise C₁-bis C₁₂-Alkohol ableiten,
a2) mindestens ein ethylenisch ungesättigtes Monomer a2.1) oder a2.2) gemäß nachstehender Definition:
- a2.1) mit einer (meth)acrylischen, vinylischen oder allylischen ethylenischen, vorzugsweise (meth)acrylischen, Ungesättigtheit und mit mindestens einer cyclischen Carbonatgruppe,
- a2.2) mit einer vorzugsweise (meth)acrylischen, vinylischen oder allylischen, weiter bevorzugt (meth)acrylischen, ethylenischen Ungesättigtheit und mit einer reaktiven Gruppe, bei der es sich um den Vorläufer einer cyclischen Carbonatgruppe handelt, wobei die Vorläufergruppe durch Nachmodifizierung an dem so erhaltenen Oligomer oder Polymer vor dem Erhalt des Oligomers oder Polymers chemisch in eine letztendliche Carbonatringgruppe oder eine einen Carbonatring umfassende Gruppe umgewandelt wird, wobei das Monomer a2.2) ausgewählt ist aus:
- a2.2.1): (Meth)acrylsäureester eines C₁- oder C₂- und vorzugsweise C₁-Alkohols, wobei die Estergruppen des Oligomers oder Polymers mit einem Alkohol mit einem Carbonatring nachumgeestert werden, oder
- a2.2.2): ethylenisch ungesättigte Carbonsäureanhydride oder Carbonsäuren, wobei die Anhydrid- oder Säuregruppen des Oligomers oder Polymers mit einem Alkohol mit einem Carbonatring nachverestert werden, oder
- a2.2.3): ethylenisch ungesättigte Epoxide, wobei die Epoxidgruppen des Oligomers oder Polymers durch Nachreaktion mit CO₂ in einen Carbonatring umgewandelt werden,
a3) mindestens ein ethylenisch ungesättigtes, vorzugsweise (meth)acrylisches, Monomer a3.1) gemäß nachstehender Definition:
- a3.1) umfasst mindestens eine cycloaliphatische Struktur, die aus Norbornyl, Isobornyl, t-Butylcyclohexyl, 3,3,5-Trimethylcyclohexyl, Dicyclopentadienyl und Decahydronaphthalinyl ausgewählt ist,
a4) gegebenenfalls mindestens ein vinylaromatisches Monomer,
a5) gegebenenfalls mindestens ein ethylenisch ungesättigtes, vorzugsweise (meth)acrylisches, Monomer mit mindestens einer Carboxylgruppe, wobei es sich bei der Carboxylgruppe um eine letztendliche Gruppe des Oligomers oder Polymers handelt und das Carboxyl daher nicht als Vorläufer einer Gruppe mit einem Carbonatring gemäß der Definition von a2.2.2) verwendet wird.

2. Harz nach Anspruch 1, **dadurch gekennzeichnet, dass** die Monomerenmischung a) außerdem mindestens ein ethylenisch ungesättigtes, vorzugsweise (meth)acrylisches, Monomer a6) mit mindestens einer funktionellen Gruppe, die aus Amid, Acetoacetoxy, blockiertem oder nicht blockiertem Silan, Ureido, Phosphat, Phosphonat, Phosphinat, Sulfonat, Oxazolin, Epoxid und Hydroxyl ausgewählt ist, umfasst, wobei die letzten zwei Gruppen letztendliche Gruppen des Oligomers oder Polymers sind.

3. Harz nach Anspruch 1 oder 2, **dadurch gekennzeichnet, dass** die Mischung a) außerdem in einem untergeordneten Gewichtsanteil mindestens ein Polyesterharz umfasst, vorzugsweise auf Basis von Fettsäuren, insbesondere ein Alkydharz, das somit mit der Monomerenmischung a) chemisch modifiziert, insbesondere gepfropft, sein kann, wobei das Polyesterharz, insbesondere Alkydharz, vorzugsweise in einem Gehalt von weniger als 30 Gew.-%, bezogen auf das Gesamtgewicht der Monomere a) + des Polyesterharzes, vorliegt.

4. Harz nach einem der Ansprüche 1 bis 3, **dadurch gekennzeichnet, dass** der in mmol/g ausgedrückte Gehalt an cyclischen Carbonatgruppen mindestens 0,35 und vorzugsweise 0,85 bis 3,60 beträgt.

5. Harz nach einem der Ansprüche 1 bis 4, **dadurch gekennzeichnet, dass** es sich bei dem Monomer a2.1) um einen Monoalkoholester mit einer cyclischen Carbonatgruppe, vorzugsweise einen Ester von Glycerylcarbonat mit einer ethylenisch ungesättigten Carbonsäure und/oder einem ethylenisch ungesättigten Carbonsäureanhydrid handelt, wobei die Säure und/oder das Anhydrid weiter bevorzugt aus der Säure und/oder dem Anhydrid entsprechend (Meth)acrylsäure, Maleinsäure und Fumarsäure/-anhydrid, Itaconsäure/-anhydrid, Tetrahydrophthalsäure/-anhydrid, weiter bevorzugt (Meth)acrylsäure, ausgewählt ist.

6. Harz nach einem der Ansprüche 1 bis 5, **dadurch gekennzeichnet, dass** es sich bei allen der Monomere a1), a2), a3) und gegebenenfalls a5) und a6) ausschließlich um Monomere mit (meth)acrylischer ethylenischer Ungesättigtheit handelt.

7. Harz nach einem der Ansprüche 1 bis 6, **dadurch gekennzeichnet, dass** der Gewichtsgehalt des Monomers a3) in dem Harz im Bereich von 15 bis weniger als 30 % und vorzugsweise von 15 bis 25 % liegt.

8. Verfahren zur Herstellung eines Harzes gemäß einem der Ansprüche 1 bis 7, **dadurch gekennzeichnet, dass** es mindestens einen Polymerisationsschritt i), vorzugsweise auf radikalischem Wege, der Monomerenmischung a) umfasst, wobei a2) aus den Monomeren a2.1) oder a2.2) ausgewählt ist.

9. Verfahren nach Anspruch 8, **dadurch gekennzeichnet, dass** es mindestens einen Polymerisationsschritt i), vorzugsweise auf radikalischem Wege, der Monomerenmischung a), die ein Monomer a2), das aus den Monomeren gemäß a2.2) ausgewählt ist, umfasst, und einen zusätzlichen Schritt ii) der chemischen Modifizierung der Vorläufergruppen in Gruppen mit einem Carbonatring gemäß a2.2) und Anspruch 1 umfasst.

10. Verfahren nach einem der Ansprüche 8 oder 9, **dadurch gekennzeichnet, dass** es die Polymerisation der Monomerenmischung a), die außerdem in einem untergeordneten Anteil ein Polyesterharz insbesondere ein Alkydharz, umfasst, vorzugsweise in einem Gehalt von weniger als 30 Gew.-%, bezogen auf das Gesamtgewicht von Polyesterharz + Monomeren a), mit Polymerisation und fakultativer Pfropfung, vorzugsweise radikalisch, in Lösungsmittelmedium umfasst.

11. Harzlösung in einem organischen Lösungsmittel, **dadurch gekennzeichnet, dass** sie mindestens 50 Gew.-%, vorzugsweise mindestens 60 Gew.-% und weiter bevorzugt 60 bis 95 Gew.-% und noch weiter bevorzugt 68 bis 90 Gew.-% Harz gemäß einem der Ansprüche 1 bis 7 oder durch ein Verfahren gemäß einem der Ansprüche 8 bis 10 erhaltenes Harz umfasst.

12. Lösung nach Anspruch 11, **dadurch gekennzeichnet, dass** das organische Lösungsmittel ausgewählt ist aus: Ketonen, insbesondere Acetonen, Butanon, Methylethylketon, Methylamylketon, Methylisobutylketon, Cyclohexanon, Essigsäure- und Propionsäureestern, insbesondere Essigsäureethylester, Essigsäurebutylester, Essigsäureisoamylester, Essigsäurepentylester, Ethyl-3-ethoxypropionsäurethylester, Ester von Dicarbonsäuren und von Methanol, Ethanol, (Iso)propanol, (Iso)butanol, aromatischen Lösungsmitteln wie schweren oder leichten Erdölfraktionen mit jeweiligen Siedepunktsbereichen von 180-215 °C und 150-180 °C, Toluol, Xylol und Isomeren davon, aliphatischen Lösungsmitteln wie Isophoron oder Heptan, Alkoholen, insbesondere Ethylenglykol, Propylenglykol, Ethanol, Propanol, Butanol, Pentanol, Hexanol, Heptanol und den entsprechenden Isomeren davon oder Glycerin, Glykolethern, insbesondere 2-Butoxyethanol, Propylenglykolmethyletheracetat, Propylenglykolmethylether, Propylenglykol-n-butylether, Propylenglykol-n-propylether, Dipropylenglykol-n-butylether, Lösungsmitteln mit Heteroatomen, insbesondere Dimethylsulfoxid, N-Ethylpyrrolidon, Tetrahydrofuran oder binären und ternären Mischungen der Lösungsmittel, sofern sie miteinander verträglich sind.

13. Vernetzbare Zusammensetzung, umfassend ein organisches Lösungsmittel, **dadurch gekennzeichnet, dass** sie mindestens ein Harz gemäß einem der Ansprüche 1 bis 7 oder durch ein Verfahren gemäß einem der Ansprüche 8 bis 10 erhaltenes Harz und mindestens ein aus Polyaminen ausgewähltes Vernetzungsmittel umfasst.

14. Zusammensetzung nach Anspruch 13, **dadurch gekennzeichnet, dass** das Polyamin eine Funktionalität von mindestens 2 aufweist und dass das Polyamin aus Polyamin-Monomeren und/oder -oligomeren ausgewählt ist, wobei die Oligomere vorzugsweise eine zahlenmittlere Masse Mn von nicht mehr als 1500, weiter bevorzugt nicht mehr als 1000, aufweisen.

15. Zusammensetzung nach Anspruch 13 oder 14, **dadurch gekennzeichnet, dass** das Polyamin primäre oder sekundäre Aminfunktionen trägt und dass es aus Polyaminen mit aliphatischer oder cycloaliphatischer und gegebenenfalls aromatischer Struktur ausgewählt ist.

16. Zusammensetzung nach einem der Ansprüche 13 bis 15, **dadurch gekennzeichnet, dass** es sich bei dem Polyamin um ein C₁₂- bis C₅₄- und vorzugsweise C₁₂- bis C₂₂-Fettpolyamin und/oder ein Polyamin auf Basis von Polyether und/oder ein Polyamin auf Basis von Polyalkylenimin und/oder ein Polyamin auf Basis von Acryloligomeren handelt, wobei das Polyamin auf Basis von Polyethern, Polyalkyleniminen oder Acryloligomeren ein Mn von weniger als 1000 aufweist.

17. Zusammensetzung nach einem der Ansprüche 13 bis 15, **dadurch gekennzeichnet, dass** es sich bei dem Polyamin um ein Acryloligomer handelt, das sich aus der Copolymerisation eines Acrylmonomers mit einer primären oder sekundären Aminfunktion ergibt.

18. Zusammensetzung nach einem der Ansprüche 13 bis 17, **dadurch gekennzeichnet, dass** es sich bei der Zusammensetzung um eine Zusammensetzung mit Einkomponentenverhalten handelt, wobei das Polyamin mit einem Blockierungsmittel blockiert ist.

19. Zusammensetzung nach einem der Ansprüche 13 bis 18, **dadurch gekennzeichnet, dass** der Feststoffgehalt des Harzes gemäß einem der Ansprüche 1 bis 7 oder durch ein Verfahren gemäß einem der Ansprüche 8 bis 10 erhaltenen Harzes und des Polyamin-Vernetzungsmittels mehr als 20 Gew.-%, vorzugsweise 60 bis 85 Gew.-% und weiter bevorzugt 65 bis 85 Gew.-% beträgt.

20. Zusammensetzung nach einem der Ansprüche 13 bis 19, **dadurch gekennzeichnet, dass** es sich um eine Beschichtungszusammensetzung, insbesondere eine Schutzbeschichtungszusammensetzung, handelt.

21. Zusammensetzung nach einem der Ansprüche 13 bis 20, **dadurch gekennzeichnet, dass** sie einen Gehalt an flüchtigen organischen Verbindungen von weniger als 420 g/l aufweist.

22. Verwendung mindestens eines Harzes gemäß einem der Ansprüche 1 bis 7 oder durch ein Verfahren gemäß einem der Ansprüche 8 bis 10 erhaltenen Harzes, **dadurch gekennzeichnet, dass** sie für die Herstellung von vernetzten Polyurethanen ohne Verwendung von Isocyanat ist.

23. Verwendung nach Anspruch 22, **dadurch gekennzeichnet, dass** es sich um Beschichtungen handelt, vorzugsweise Beschichtungen für Substrate, die aus Metall, Holz einschließlich Spanholz, Pappe, Beton, Keramik, Glas, Kunststoff oder Verbundwerkstoff ausgewählt sind.

24. Vernetztes Polyurethan, **dadurch gekennzeichnet, dass** es sich aus einem Harz gemäß einem der Ansprüche 1 bis 7 oder durch ein Verfahren gemäß einem der Ansprüche 8 bis 10 erhaltenen Harz oder einer vernetzbaren Zusammensetzung gemäß einem der Ansprüche 13 bis 21 ergibt.

## Claims

1. Resin soluble in organic and non-crosslinked solvent media and bearing terminal and/or pendant cyclic carbonate groups, in particular having a functionality of at least 2, **characterized in that** said resin is an oligomer and/or polymer based on a mixture a) of monomers comprising:
a1) at least one ethylenically unsaturated monomer chosen from (meth)acrylic esters derived from a C₁ to C₁₈, preferably C₁ to C₁₂, aliphatic alcohol,
a2) at least one ethylenically unsaturated monomer a2.1) or a2.2) as defined below:
- a2.1) bearing a (meth)acrylic, vinyl or allylic ethylenic unsaturation, preferably (meth)acrylic, and bearing at least one cyclic carbonate group
- a2.2) bearing an ethylenic unsaturation, preferably (meth)acrylic, vinyl or allylic, more preferably (meth)acrylic, and bearing a reactive group that is the precursor of a cyclic carbonate group, said precursor group being chemically converted by postmodification on the oligomer or polymer thus obtained before production of said oligomer or polymer into a carbonate ring final group or into a group comprising a carbonate ring, said monomer a2.2) being selected from:
- a2.2.1): (meth)acrylic esters of a C₁ or C₂, preferably C₁, alcohol, said ester groups of said oligomer or polymer being post-transesterified with an alcohol bearing a carbonate ring or
- a2.2.2): ethylenically unsaturated carboxylic anhydrides or acids, the anhydride or acid groups of said oligomer or polymer being post-esterified with an alcohol bearing a carbonate ring or
- a2.2.3): ethylenically unsaturated epoxides, said epoxy groups of said oligomer or polymer being converted into a carbonate ring by post-reaction with CO₂,
a3) at least one ethylenically unsaturated monomer a3.1), preferably (meth)acrylic, as defined below:
- a3.1) comprises at least one cycloaliphatic structure selected from: norbornyl, isobornyl, t-butylcyclohexyl, 3,3,5-trimethylcyclohexyl, dicyclopentadienyl and decahydronaphthalenyl,
a4) optionally, at least one aromatic vinyl monomer,
a5) optionally at least one ethylenically unsaturated monomer, preferably (meth)acrylic, bearing at least one carboxyl group, said carboxyl group being a final group of said oligomer or polymer and thus said carboxyl is not employed as a precursor of a group bearing a carbonate ring according to the definition of a2.2.2).

2. Resin according to Claim 1, **characterized in that** said mixture of monomers a) also comprises at least one ethylenically unsaturated monomer a6), preferably (meth)acrylic, bearing at least one functional group selected from: amide, acetoacetoxy, blocked or unblocked silane, ureido, phosphate, phosphonate, phosphinate, sulfonate, oxazoline, epoxy, hydroxyl, the latter two groups being final groups of said oligomer or polymer.

3. Resin according to Claim 1 or 2, **characterized in that** said mixture a) also comprises, in a minor proportion by weight, at least one polyester resin, preferably based on fatty acids, in particular an alkyd resin, and which may thus be chemically modified, in particular grafted, by said mixture of monomers a), said polyester resin, in particular alkyd resin, preferably being present in a content of less than 30% by weight relative to the total weight of said monomers a) + said polyester resin.

4. Resin according to one of Claims 1 to 3, **characterized in that** the content of cyclic carbonate groups expressed in mmol/g is at least 0.35 and preferably from 0.85 to 3.60.

5. Resin according to one of Claims 1 to 4, **characterized in that** said monomer a2.1) is a monoalcohol ester containing a cyclic carbonate group, preferably an ester of glyceryl carbonate with an ethylenically unsaturated carboxylic acid and/or anhydride, said acid and/or anhydride more preferably being selected from the acid and/or anhydride corresponding to (meth)acrylic acid, maleic and fumaric acid/anhydride, itaconic acid/anhydride, tetrahydrophthalic acid/anhydride, more preferably (meth)acrylic acid.

6. Resin according to one of Claims 1 to 5, **characterized in that** all the monomers a1), a2), a3) and optionally a5) and a6) are exclusively (meth)acrylic ethylenically unsaturated monomers.

7. Resin according to one of Claims 1 to 6, **characterized in that** the content by weight of said monomer a3) in said resin ranges from 15% to less than 30% and preferably from 15% to 25%.

8. Process for preparing a resin as defined according to one of Claims 1 to 7, **characterized in that** it comprises at least one step of polymerization i), preferably by a free-radical route, of said mixture of monomers a) with a2) selected from the monomers a2.1) or a2.2).

9. Process according to Claim 8, **characterized in that** it comprises at least said step of polymerization i), preferably by a free-radical route, of said mixture of monomers a) comprising a monomer a2) selected from the monomers as defined according to a2.2) and an additional step ii) of chemical modification of said precursor groups into groups bearing a carbonate ring, as defined according to a2.2) and Claim 1.

10. Process according to either of Claims 8 and 9, **characterized in that** it comprises the polymerization of said mixture of monomers a), which also comprises in minor proportion a polyester resin, in particular alkyd resin, preferably in a content of less than 30% by weight relative to the total weight of polyester resin + monomers a), with polymerization and optional grafting, preferably free-radical-mediated, in solvent media.

11. Solution of resin in an organic solvent, **characterized in that** it comprises at least 50%, preferably at least 60% and more preferably from 60% to 95% and even more preferably from 68% to 90%, by weight of resin, as defined according to one of Claims 1 to 7 or obtained by a process as defined according to one of Claims 8 to 10.

12. Solution according to Claim 11, **characterized in that** said organic solvent is selected from: ketones, in particular acetone, butanone, methyl ethyl ketone, methyl amyl ketone, methyl isobutyl ketone, cyclohexanone, acetic and propionic esters, in particular ethyl acetate, butyl acetate, isoamyl acetate, pentyl acetate, ethyl ethyl 3-ethoxypropionate, esters of dicarboxylic acids and of methanol, ethanol, (iso)propanol or (iso)butanol, aromatic solvents such as heavy or light petroleum fractions having respective boiling point ranges of 180-215°C and 150-180°C, toluene, xylene and isomers thereof, aliphatic solvents such as isophorone or heptane, alcohols, in particular ethylene glycol, propylene glycol, ethanol, propanol, butanol, pentanol, hexanol, heptanol and the corresponding isomers thereof or glycerol, glycol ethers, in particular 2-butoxyethanol, propylene glycol methyl ether acetate, propylene glycol methyl ether, propylene glycol n-butyl ether, propylene glycol n-propyl ether, dipropylene glycol n-butyl ether, solvents with heteroatoms, in particular dimethyl sulfoxide, N-ethylpyrrolidone, tetrahydrofuran or binary and ternary mixtures of said solvents if mutually compatible.

13. Crosslinkable composition comprising an organic solvent, **characterized in that** it comprises at least one resin as defined according to one of Claims 1 to 7 or obtained by a process as defined according to one of Claims 8 to 10 and at least one crosslinking agent chosen from polyamines.

14. Composition according to Claim 13, **characterized in that** said polyamine has a functionality of at least 2 and **in that** said polyamine is selected from polyamine monomers and/or oligomers, said oligomers preferably having a number-average mass Mn not exceeding 1500, more preferably not more than 1000.

15. Composition according to Claim 13 or 14, **characterized in that** said polyamine bears primary or secondary amine functions and **in that** it is selected from polyamines of aliphatic or cycloaliphatic and optionally aromatic structure.

16. Composition according to one of Claims 13 to 15, **characterized in that** said polyamine is a C₁₂ to C₅₄, preferably C₁₂ to C₂₂, fatty polyamine and/or a polyether-based polyamine and/or a polyalkyleneimine-based polyamine and/or an acrylic oligomers-based polyamine, said polyether-based polyamine and/or polyalkyleneimine-based polyamine and/or acrylic oligomers-based polyamine having an Mn of less than 1000.

17. Composition according to one of Claims 13 to 15, **characterized in that** said polyamine is an acrylic oligomer resulting from the copolymerization of an acrylic monomer bearing a primary or secondary amine function.

18. Composition according to one of Claims 13 to 17, **characterized in that** said composition is a composition having single-component behaviour, said polyamine being blocked with a blocking agent.

19. Composition according to one of Claims 13 to 18, **characterized in that** the content of dry extract of said resin as defined according to one of Claims 1 to 7 or obtained by a process as defined according to one of Claims 8 to 10 and of said polyamine crosslinking agent is greater than 20%, preferably from 60% to 85% and more preferably 65% to 85% by weight.

20. Composition according to one of Claims 13 to 19, **characterized in that** it is a coating composition, in particular for protective coating.

21. Composition according to one of Claims 13 to 20, **characterized in that** it has a content of volatile organic compounds of less than 420 g/l.

22. Use of at least one resin as defined according to one of Claims 1 to 7 or obtained by a process as defined according to one of Claims 8 to 10, **characterized in that** it is for the preparation of polyurethanes crosslinked without any use of isocyanate.

23. Use according to Claim 22, **characterized in that** it concerns coatings, preferably coatings for substrates selected from: metal, wood including agglomerate, cardboard, concrete, ceramic, glass, plastic or composite.

24. Crosslinked polyurethane, **characterized in that** it results from a resin as defined according to one of Claims 1 to 7 or obtained by a process as defined according to one of Claims 8 to 10 or from a crosslinkable composition as defined according to one of Claims 13 to 21.
